(19) Europäisches Patentamt
European Patent Office
Office européen des brevets

(11) **EP 2 904 549 B1**

(12) **EUROPÄISCHE PATENTSCHRIFT**

(45) Veröffentlichungstag und Bekanntmachung des Hinweises auf die Patenterteilung:
**05.05.2021 Patentblatt 2021/18**

(21) Anmeldenummer: **13763094.3**

(22) Anmeldetag: **19.09.2013**

(51) Int Cl.:
*G06K 19/077* *(2006.01)*

(86) Internationale Anmeldenummer:
**PCT/EP2013/069454**

(87) Internationale Veröffentlichungsnummer:
**WO 2014/056697 (17.04.2014 Gazette 2014/16)**

(54) **VORRICHTUNG ZUR ÜBERTRAGUNG VON SIGNALEN AUS EINEM METALLGEHÄUSE**

DEVICE FOR SIGNAL TRANSMISSION FROM A METAL CONTAINER

APPAREIL POUR LA TRANSMISSION DE SIGNAUX A PARTIR D'UN CONTENEUR METALLIQUE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **08.10.2012 DE 102012109539**

(43) Veröffentlichungstag der Anmeldung:
**12.08.2015 Patentblatt 2015/33**

(73) Patentinhaber: **Endress+Hauser SE+Co. KG**
**79689 Maulburg (DE)**

(72) Erfinder: **BLÖDT, Thomas**
**79689 Maulburg (DE)**

(74) Vertreter: **Andres, Angelika Maria**
**Endress+Hauser Group Services (Deutschland) AG+Co. KG**
**Colmarer Straße 6**
**79576 Weil am Rhein (DE)**

(56) Entgegenhaltungen:
**EP-A1- 1 308 883 US-A1- 2012 187 197**

**Beschreibung**

Die Erfindung betrifft eine Vorrichtung zur Übertragung von Signalen aus einem zumindest teilweise aus Metall gebildeten Gehäuse. Bevorzugt dient die Vorrichtung zur Identifizierung von Daten in Speichermedien mit Hilfe elektromagnetischer Wellen (RFID).

In der Automatisierungstechnik, insbesondere in der Prozessautomatisierungstechnik, werden vielfach Feldgeräte eingesetzt, die zur Bestimmung, Optimierung und/oder Beeinflussung von Prozessvariablen dienen. Zur Erfassung von Prozessvariablen dienen Sensoren, wie beispielsweise Füllstandsmessgeräte, Durchflussmessgeräte, Druck- und Temperaturmessgeräte, Leitfähigkeitsmessgeräte, usw., welche die entsprechenden Prozessvariablen Füllstand, Durchfluss, Druck, Temperatur bzw. Leitfähigkeit erfassen. Zur Beeinflussung von Prozessvariablen dienen Aktoren, wie zum Beispiel Ventile oder Pumpen, über die der Durchfluss einer Flüssigkeit in einem Rohrleitungsabschnitt bzw. der Füllstand in einem Behälter geändert werden kann. Als Feldgeräte werden im Prinzip alle Geräte bezeichnet, die prozessnah eingesetzt werden und die prozessrelevante Informationen liefern oder verarbeiten. Im Zusammenhang mit der Erfindung werden unter Feldgeräten also auch Remote I/Os, Funkadapter bzw. allgemein Geräte verstanden, die auf der Feldebene angeordnet sind. Eine Vielzahl solcher Feldgeräte wird von der Firma Endress + Hauser hergestellt und vertrieben. RFID-Systeme werden beispielsweise verwendet, um Feldgeräte zu identifizieren.

Ein RFID-System besteht aus einem Transponder, der sich in einem Gehäuse befindet und einen kennzeichnenden Code enthält, sowie einem Lesegerät zum Auslesen dieser Kennung. Ein NFC-System ermöglicht zusätzlich einen entgegengesetzten Informationsweg. Nachteilig an RFID- und NFC-Transpondern ist das Metallgehäuse oder das metallisch beschichtete Gehäuse der meisten Feldgeräte, welche für elektromagnetische Wellen im für RFID notwendigen Bereich im Wesentlichen nicht durchlässig sind. EP 1 308 883 A1 offenbart eine Vorrichtung zur Übertragung von Signalen aus einem zumindest teilweise aus Metall gebildeten Gehäuse zur Identifizierung mit Hilfe elektromagnetischer Wellen, umfassend mindestens eine erste Gehäuseöffnung und eine in dem Gehäuse angeordnete Spulenanordnung zur Erzeugung eines Magnetfeldes. US 2012/187197 A1 offenbart RFID-Tags, die in Aussparungen innerhalb der Außenflächen von Objekten oder Behältern eingebettet sind, beispielsweise in einem Metallventilflansch für einen Metallbehälter.

Der Erfindung liegt die Aufgabe zugrunde, eine Vorrichtung zu schaffen, welche die Übertragung von RFID- oder NFC-Signalen aus einem metallischen Gehäuse verbessert.

Diese Aufgabe wird durch die Vorrichtung entsprechend dem Gegensand des Anspruchs 1 gelöst. Solch eine Vorrichtung zur Übertragung von Signalen aus einem zumindest teilweise aus Metall gebildeten Gehäuse, insbesondere zur Identifizierung mit Hilfe elektromagnetischer Wellen (RFID), umfasst mindestens eine erste Gehäuseöffnung, - eine Spulenanordnung zur Erzeugung der elektromagnetischen Wellen (RFID), dadurch gekennzeichnet, dass die Spulenanordnung einen Spulenkern aufweist, der zumindest in einem Endbereich derart entlang eines Vektors ($B_{max}$) verläuft, so dass die magnetische Flussdichte, die aus dem Endbereich der Spulenanordnung ein- oder austritt, entlang des Vektors ($B_{max}$) einen maximalen Betrag aufweist, und wobei die Spulenanordnung derart in dem Gehäuse angeordnet ist, dass der Vektor ($B_{max}$) auf die erste Gehäuseöffnung zeigt.

Bei der Gehäuseöffnung kann es sich beispielsweise um Kabeldurchführungskappen oder Kabelstutzen handeln. Die Spulenanordnung umfasst eine oder mehrere Spulen mit mindestens einer, bevorzugt aber mehreren Windungen, wobei jede Spule keinen, einen oder mehrere Spulenkerne umfassen kann. Wird durch Anlegen einer Spannung an der Spulenanordnung ein Magnetfeld erzeugt, tritt das Magnetfeld an einer bestimmten Stelle aus der Spulenanordnung. Umfasst die Spulenanordnung beispielsweise keinen Spulenkern, tritt das Magnetfeld aus den beiden Spulenöffnungen aus der Spulenanordnung. Umfasst die Spulenanordnung beispielsweise einen Spulenkern, dann tritt das Magnetfeld aus der Oberfläche des Spulenkerns aus der Spulenanordnung. Das vektorielle Magnetfeld besitzt an der Stelle, an welcher das Magnetfeld aus der Spulenanordnung austritt, einen Vektor, der maximal ist. Dieser Vektor oder sein Gegenvektor soll erfindungsgemäß bei einer Streckung durch die Gehäuseöffnung verlaufen. Dabei bedeutet Streckung eine Multiplikation eines Vektors mit einem Skalar, der größer als Eins ist.

Bei dem Signal kann es sich um Daten handeln, die einem Lesegerät Informationen über bestimmte Prozessgrößen übermitteln. Ferner kann das Lesegerät auf diese Weise Informationen darüber erhalten, ob der Transponder die Daten vollständig übermittelt hat oder eine Funktionsstörung seitens des Transponders oder durch die teilweise metallische Wandung vorliegt.

Zeigt der maximale Vektor oder sein Gegenvektor auf die Gehäuseöffnung, dann wird bei einer festen Größe der Gehäuseöffnung erfindungsgemäß die Sendeleistung, die aus dem Gehäuse gelangt maximal. Folglich löst der Gegenstand des Anspruchs 1 die Aufgabe der Erfindung.

In einer weiteren Ausgestaltungsform kann das Gehäuse eine zweite Gehäuseöffnung aufweisen, und der Vektor oder sein Gegenvektor zeigt auf die erste Gehäuseöffnung oder auf die zweite Gehäuseöffnung. Eine Feldlinie, zu welcher der Vektor tangential steht, verläuft im Wesentlichen durch die erste Gehäuseöffnung und durch die zweite Gehäuseöffnung. Die zweite Gehäuseöffnung ermöglicht, dass die Feldlinien, die aus der ersten Gehäuseöffnung austreten, aus der zweiten Gehäuseöffnung wieder eintreten. Dadurch müssen die austretenden und die eintretenden Feldlinien sich nicht eine Gehäuseöffnung teilen. Hierdurch werden gegenseitige Überlagerungen und gegenseitige Störungen vermieden.

Weiterhin kann die Spulenanordnung eine irreguläre Form, wie z. B. eine mäanderartige, fraktale oder fraktal-ähnliche Form annehmen. Diese Formen sind aus verfahrenstechnischen Gründen vorteilhaft. Alternativ kann der Querschnitt der Spulenanordnung auch quadratisch, rund, elliptisch sein. Andere Querschnitte sind ebenfalls möglich.

Gemäß einer Weiterbildung ist im Gehäuse eine Elektronikeinheit angeordnet, die mit der Spulenanordnung mittels eines Hochfrequenzleiters, insbesondere eines Koaxialkabels verbunden ist. Vorteilhaft bei der Nutzung eines Hochfrequenzleiters bzw. eines Koaxialkabels ist, dass die zu übertragenden Signale nicht durch elektrische und/oder magnetische Felder gestört werden können.

In einer weiteren Ausgestaltungsform weist die Elektronikeinheit eine hochfrequenztechnische und/oder eine niederfrequenztechnische Schnittstelle (HF-Schnittstelle) auf, wobei die HF-Schnittstelle über eine Impedanzanpassung und/oder einen Balun mit der Spulenanordnung verbunden ist. Ein Balun kann in diesem Fall als Impedanzwandler zur Leistungsanpassung wirken.

In einer weiteren Ausgestaltungsform umfasst die Spulenanordnung mindestens eine Spule und mindestens einen Spulenkern, wobei die Spule dermaßen asymmetrisch auf dem Spulenkern angeordnet ist, dass das erzeugte Magnetfeld asymmetrisch ausgebildet ist. Hat die Spule einen kleineren Abstand zu einem ersten Endbereich des Spulenkerns als zu einem zweiten Endbereich des Spulenkerns, dann ist die Flussdichte des Magnetfelds an dem ersten Endbereich größer als an dem zweiten Endbereich. Jedoch ist die Streuweite des Magnetfelds an dem zweiten Endbereich größer als an dem ersten Endbereich des Spulenkerns.

In einer weiteren Ausgestaltungsform weist der mindestens eine Spulenkern der Spulenanordnung Strukturen auf seiner Oberfläche auf, welche so ausgestaltet sind, dass die Feldverteilung des aus der Spulenanordnung austretenden Magnetfeldes beeinflusst wird. Derartige Strukturen können beispielsweise aus Verengungen, Aufweitungen, Abschrägungen, Anrauungen, Trichtern und/ oder anderen Materialien bestehen. Derartige Strukturen auf der Oberfläche des Spulenkerns führen dazu, dass das Magnetfeld verstärkt, gebündelt, geweitet, gedreht oder in eine Vorzugsrichtung gebracht wird oder ein größerer Teil der Feldverteilung innerhalb des Gehäuses belassen wird.

In einer weiteren Ausgestaltungsform ist der Spulenkern aus einem ferromagnetischen und/oder diamagnetischen und/oder paramagnetischen Stoff, wie beispielsweise PVC und/oder Kunststoff, gebildet. Vorteilhaft dabei ist die breite Produktpalette an Stoffen, die man zur Auswahl für den Spulenkern hat.

In einer weiteren Ausgestaltungsform umfasst die Spulenanordnung mehrere Teilspulen, die miteinander und/oder mit einer Signalmasse und/oder mit einer Signalmasse der Elektronikeinheit elektrisch verbunden sind. Vorteilhaft an einer Spulenanordnung mit mehreren geerdeten Teilspulen ist, dass jede Teilspule einen eigenen Beitrag zur Spannung leistet. Die Spannung der Teilspulen addiert sich dann zu einer Gesamtspannung.

In einer weiteren Ausgestaltungsform weist die Spulenanordnung mindestens eine Windung auf und ist als ein elektrisch offener Stromkreis ausgebildet. Zwischen den offenen Endebereichen des Stromkreises der Spulenanordnung bildet sich eine Kapazität, die zur Erzeugung von elektromagnetischen Wellen ausgenutzt werden kann.

In einer weiteren Ausgestaltungsform ist die Spulenanordnung mit einer Verbindungsleitung elektrisch an die Gehäusewand angeschlossen. Ist ein offener Endbereich einer der Verbindungsleitungen der Spulenanordnung an die Gehäusewand angeschlossen, dann bildet die Gehäusewand eine Elektrode der Kapazität und der andere offene Endbereich der Verbindungsleitung der Spulenanordnung die Gegenelektrode der Kapazität.

In einer weiteren Ausgestaltungsform ist mindestens eine der Gehäuseöffnungen durch eine Scheibe aus Plastik und/oder Glas geschlossen, und/oder die Spulenanordnung ist in eine zu mindestens einer Gehäuseöffnung hin offene separate Kammer angeordnet.

Die Aufgabe der Erfindung wird weiterhin durch ein RFID-System gelöst, das die erfindungsgemäße Vorrichtung umfasst. Ein RFID-System mit einer erfindungsgemäßen Vorrichtung ermöglicht, dass Daten mittels eines Lesegeräts aus einem metallischen Gehäuse gelesen werden können.

Die Aufgabe der Erfindung wird darüber hinaus durch ein Feldgerät mit einem Lesegerät und einem erfindungsgemäßen RFID-System gelöst. Ein Feldgerät mit einem erfindungsgemäßen RFID-System ermöglicht die Datenübertragung durch eine metallische Wand.

Die Aufgabe der Erfindung wird ebenfalls durch die Verwendung einer erfindungsgemäßen Vorrichtung für Bluetooth (IEEE 802.15.1), WLAN (IEEE 802.15.1), HIPERLAN, IWLAN, WirelessHART oder einer Form von NFC gelöst. Durch die Verwendung der erfindungsgemäßen Vorrichtung können Daten der oben genannten Funknetze selbst über teilweise metallische Wände übertragen werden.

Die Erfindung wird anhand der nachfolgenden Figuren erläutert. Es zeigt:

Fig. 1: ein RFID-Transponder mit einer um die Elektronikeinheit gewickelten Spulenanordnung (Stand der Technik)

Fig. 2: ein RFID-Transponder mit einer länglichen Spulenanordnung (Stand der Technik)

Fig. 3: ein RFID-Transponder (Stand der Technik)

Fig. 4: eine Elektronikeinheit mit einer erfindungsgemäße Spulenanordnung in einem metallischen Gehäuse

Fig. 5: eine erfindungsgemäße Spulenanordnung in einem metallischen Gehäuse

Fig. 6: eine mittels eines koaxialen Kabels oder eines Hochfrequenzleiters mit der Elektronikeinheit elektrisch verbundene erfindungsgemäße Spulenanordnung in einem metallischen Gehäuse

Fig. 7: eine Elektronikeinheit mit einer in einer separaten Kammer und hinter einer Scheibe angeordnete erfindungsgemäße Spulenanordnung

Fig. 8: eine erfindungsgemäße Spulenanordnung mit einer Spule, die asymmetrisch auf einem Spulenkern angebracht ist, angeordnet in einem Gehäuse mit zwei Gehäuseöffnungen

Fig. 9: eine erfindungsgemäße Spulenanordnung mit einer Spule, die asymmetrisch auf einem geknickten Spulenkern angebracht ist, angeordnet in einem Gehäuse mit zwei Gehäuseöffnungen

Fig. 10: eine erfindungsgemäße Spulenanordnung mit einem U-förmigen Spulenkern, der auf seine Stirnflächen Strukturen aufweist, angeordnet in einem Gehäuse mit zwei Gehäuseöffnungen.

Fig. 11: eine Spulenanordnung aus zwei mit Signalmasse verbundenen Teilspulen, die elektrisch mit einer mit Signalmasse verbundenen Elektronikeinheit verbunden sind.

Fig. 12: eine Spulenanordnung mit einer elektrisch offenen Spule, die elektrisch mit der Elektronikeinheit verbunden ist

Fig. 13: ein Querschnitt einer Spulenanordnung mit einer elektrisch offenen Spule, bei dem der Draht beabstandet zum Isolationsmaterial angeordnet ist.

Fig. 14a: ein Querschnitt einer Spulenanordnung mit einer elektrisch offenen Spule ohne Hülle

Fig. 14b: ein Querschnitt einer Spulenanordnung mit einer elektrisch offenen Spule mit einem Schrumpfschlauch

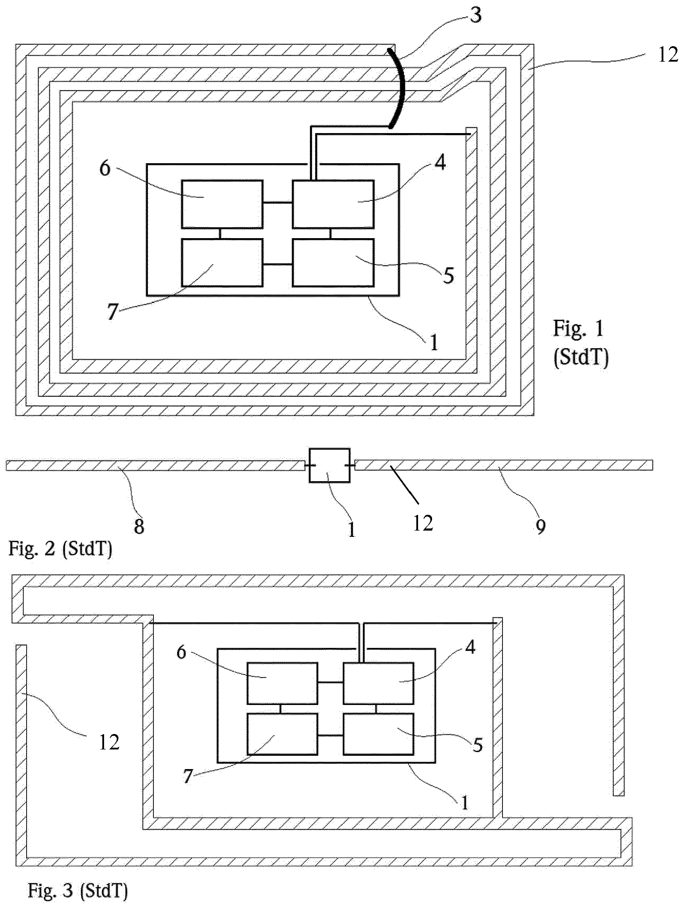

Eine Vorrichtung zur Übertragung von Signalen aus einem teilweise aus Metall gebildeten Gehäuse umfasst ein RFID-System, welches nach dem Stand der Technik aus einem RFID-Transponder, auf welchem die gewünschten Daten gespeichert sind, sowie aus einem Lesegerät besteht. Der RFID-Transponder (Fig. 1) besteht aus einer Elektronikeinheit 1, welche von einer Spulenanordnung 2 umgeben ist. Je nach Ausgestaltung der Spulenanordnung 2 ist eine Überbrückung 3 notwendig, um die Elektronikeinheit 1 und die Spulenanordnung 2 elektrisch zu verbinden.

Die Elektronikeinheit 1 besteht aus einer hochfrequenztechnischen Schnittstelle bzw. HF-Schnittstelle 4, welche die über die Spulenanordnung 2 aufgenommene Sendeleistung des Lesegeräts aufnimmt und über die Spulenanordnung 2 ein moduliertes Signal abgeben kann. Dieses modulierte Signal kann aus in einem Datenspeicher 7 gespeicherten Werten bestehen. Bei diesem Datenspeicher 7 kann es sich beispielsweise um ein ROM oder EPROM handeln. Die Sendeleistung des Lesegeräts wird von der HF-Schnittstelle 4 an eine Spannungsversorgung 5 weitergegeben und dort gespeichert. Die Versorgungseinheit 5 versorgt die Elektronikeinheit mit Energie. Eine Logikeinheit 6 ist zur Steuerung vorgesehen.

Eine weitere bekannte Ausgestaltungform im Stand der Technik (Fig. 2) sieht den Einsatz einer Spulenanordnung 2 in Form eines offenen Dipols, bestehend aus zwei offenen Leitungen 8, 9 vor.

Fig. 3 zeigt eine weitere Ausgestaltungsform einer RFID-Antenne aus dem Stand der Technik mit einer speziellen Form der Spulenanordnung 2.

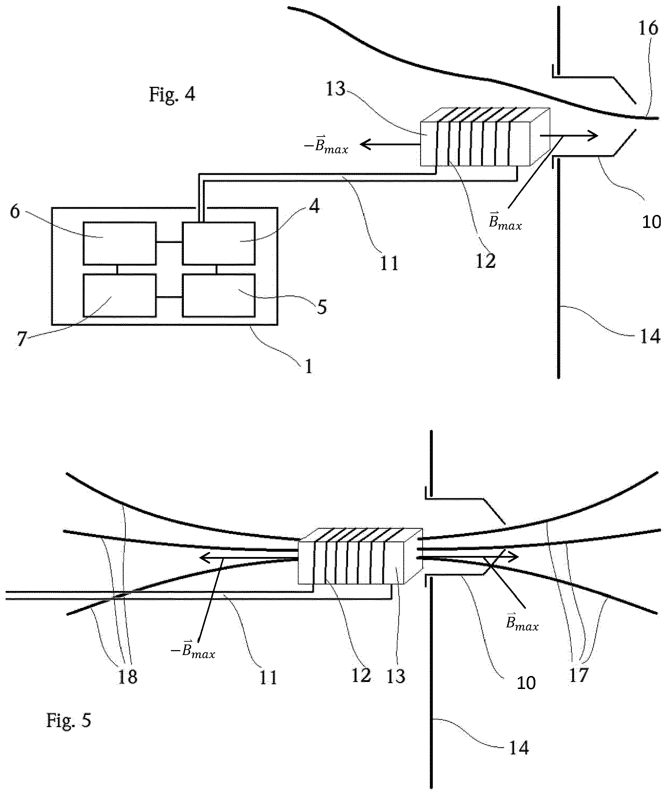

Eine erfindungsgemäße Spulenanordnung 12 (siehe Fig. 4) ist dermaßen im Gehäuse angeordnet, dass die magnetische Flussdichte, die aus der Spulenanordnung 12 ein- oder austritt, einen Vektor $\vec{B}_{max}$ mit einem maximalen Betrag aufweist, und der Vektor $\vec{B}_{max}$ zeigt auf die erste Gehäuseöffnung 10.

Hierzu besteht eine Verbindungsleitung 11 zwischen Spulenanordnung 12 und Elektronikeinheit 1, d.h. die Elektronikeinheit 1 befindet sich nicht innerhalb, sondern außerhalb der Spulenanordnung 12. Die Spulenanordnung 12 ist mit einem Spulenkern 13 ausgeführt. Insbesondere könnte die Spulenanordnung 12 in einem Plastikgehäuse integriert sein. Sich in einer ersten Gehäuseöffnung 10 befindliche Durchführungskabel 16 beeinträchtigen die Reichweite zusätzlich in geringem Maß (siehe Fig. 4), hierzu wäre die Verwendung ausschließlich von weiteren Kabeldurchführungskappen für Kabel sinnvoll.

Die Spulenanordnung 12 in Fig. 5 bildet beidseitig magnetische Feldlinien 17, 18 aus. Durch eine leitfähige Gehäusewand 14 werden die geschlossenen Feldlinien behindert. Insbesondere für hohe Frequenzen stellen selbst dünne metallisierte Flächen eine erhebliche Beeinträchtigung für elektromagnetische Wellen bis zur beinahe völligen Reflexion dar.

Mögliche Betriebsfrequenzen sind beispielsweise 13,56 MHz, 6,78 MHz und 27 MHz, 125 MHz, jedoch auch kleinere und größere Frequenzen, beispielsweise 125 kHz, 433 MHz, 920 MHz oder 5,8 GHz.

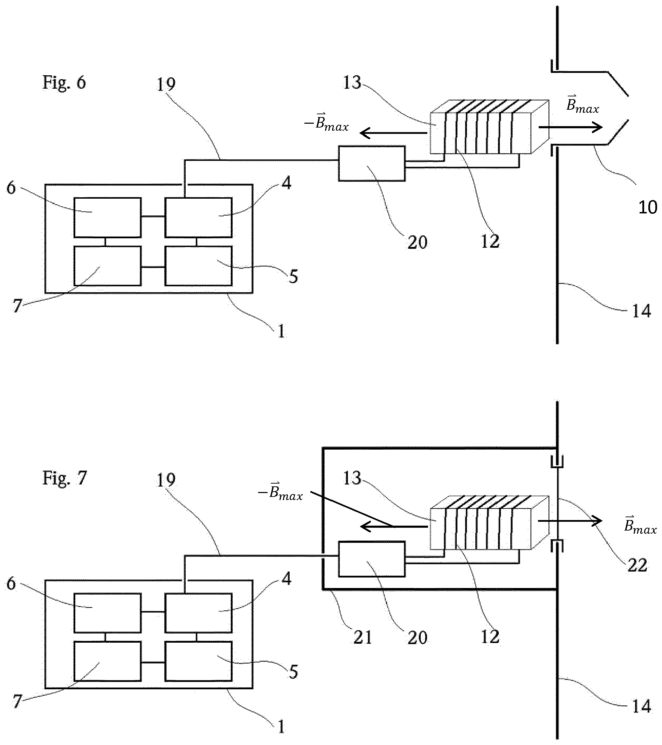

Aufgrund der Distanz zwischen der HF-Schnittstelle 4 bzw. Elektronikeinheit 1 und der Spulenanordnung 12 ist als erfindungsgemäße Variante (Fig. 6) insbesondere der Einsatz eines Hochfrequenzleiters 19, der als Koaxialkabel ausgestaltet ist, vorgesehen. Hierzu ist vorgesehen die HF-Schnittstelle 4 direkt an eine Verbindungsleitung 11 anzuschließen. Hierdurch wird zwischen HF-Schnittstelle 4 und Spulenanordnung 12 eine Impedanzanpassung 20 und/oder ein Balun 20, bei Verwendung eines Koaxialkabels 19, notwendig. Hierdurch kann die Verbindung zwischen der HF-Schnittstelle 4 und der Impedanzanpassung 20 zu einer besonders geeigneten Leitungsimpedanz gewählt werden. Durch die Verwendung von bestehenden Gehäuseöffnungen 10, 15 eignet sich diese Erfindung insbesondere zum Nachrüsten bestehender Geräte.

Eine weitere Ausgestaltungsvariante ist eine Scheibe 22 aus Kunststoff und/oder Glas und/oder eine separate Kammer 21 gemäß Fig. 7.

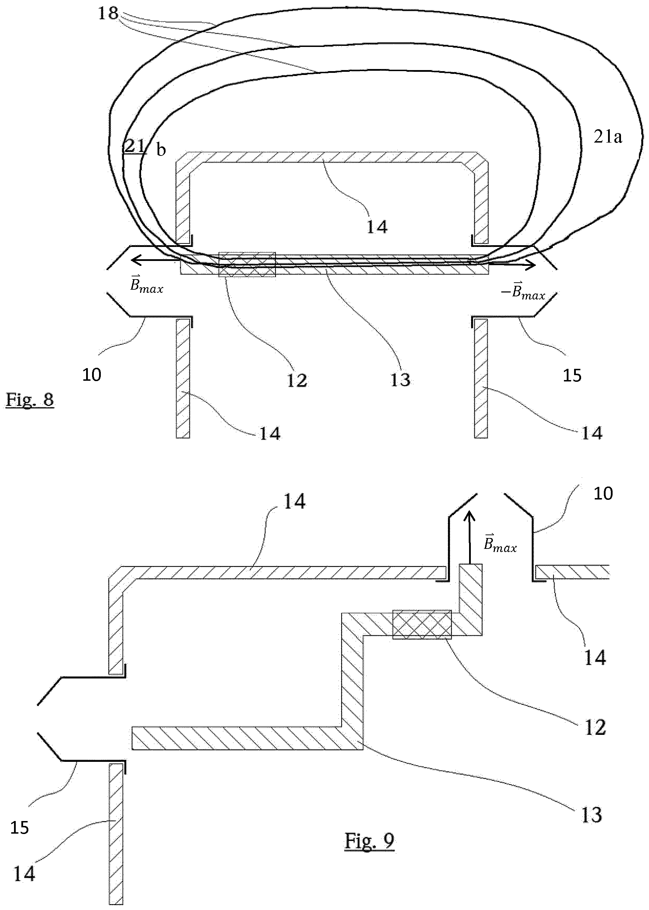

Eine weitere Ausgestaltungsvariante ist in Fig. 8 dargestellt. Hierbei wird eine Spulenanordnung 12 auf einem Spulenkern 13 derart angeordnet, dass die Feldlinien 18 durch die erste und die zweite Gehäuseöffnungen 10, 15 aus einem elektrisch leitfähigen Gehäuse gelangen können.

Für eine gleichmäßige Feldverteilung außerhalb des Gehäuses ist eine Positionierung der Spulenanordnung 12 in der Regel mittig auf dem Spulenkern 13 vorteilhaft. Im Detail wird die Feldverteilung durch die Maße, Form und Materialien des (Feld-)Geräts beeinflusst. Es ist durch numerische Simulation denkbar, ein Gehäuse oder einen Bereich eines Gehäuses derart zu konstruieren, um eine bestimmte Feldverteilung zu erreichen oder zu begünstigen.

Wird die Spulenanordnung 12 in starkem Maße asymmetrisch an einem Endbereich des Spulenkerns 13 angebracht, ergibt sich an dem diesem nahe liegenden Umgebungsbereich 21b eine etwas höhere Felddichte und in einem Bereich der abgewandten Seite 21a eine etwas geringere Felddichte sowie eine etwas größere Reichweite. In Fig. 8 sind die erste Gehäuseöffnung 10 und die zweite Gehäuseöffnung 15, die als Kabelstutzen ausgebildet sind nicht elektrisch leitfähig. Daher durchdringen die Feldlinien die erste und die zweite Gehäuseöffnung 10, 15. Fig. 8 stellt einen zweidimensionalen Schnitt dar; die Feldlinien breiten sich im Allgemeinen im gesamten umgebenden Raum aus.

Eine weitere Form einer Spulenanordnung 12 ist in Fig. 9 dargestellt. Der Spulenkern weist drei Knicke auf, wobei die Spule asymmetrisch auf dem Spulenkern 13 angeordnet ist. Solch ein Spulenkern 13 kann beispielsweise aus einem gestanzten Element bestehen.

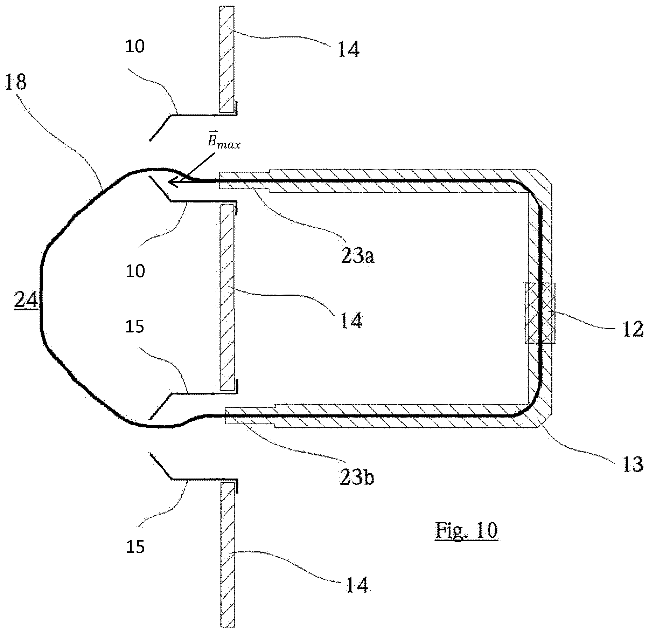

Eine vorteilhafte Ausgestaltungsvariante ist in Fig. 10 dargestellt. Im Bereich einer metallisierten Gehäusewand 14 sind zwei Gehäuseöffnungen 10, 15, die als Kabelstutzen ausgebildet sind, angebracht. Ein Spulenkern 13 ist U-förmig ausgestaltet, um an die zwei Gehäuseöffnungen, 10, 15, die als Kabelstutzen ausgebildet sind anzuliegen und mit einer Spule versehen. Hierdurch bilden sich Feldlinien 18 aus, die in einem Bereich 24 außerhalb des Gehäuses eine höhere Felddichte aufweist als das Ausführungsbeispiel in Fig. 5 mit nur einer Gehäuseöffnung. Der Bereich 24 kann abhängig von den gewählten Dimensionen wie Abmessungen, Materialien, Windungszahl, Betriebsfrequenz und weiterer Einflüsse beispielsweise um 5...800 mm von der metallisierten Gehäusewand 14 beabstandet sein.

An den Endbereichen des Spulenkerns 13 sind Strukturen 23a, 23b angebracht, um die Feldverteilung außerhalb des Gehäuses zu beeinflussen. Die Strukturen 23a, 23b sind als Verengung an den beiden Endbereichen Spulenkerns ausgebildet. In der gewählten Darstellung (Fig. 10) sind zwei teilweise elektrisch leitfähige Gehäuseöffnungen 10, 15, die als Kabeldurchführungen dargestellt, welche von Feldlinien 18 nur in zu einem vernachlässigendem Grad durchdrungen werden (abhängig von Frequenz).

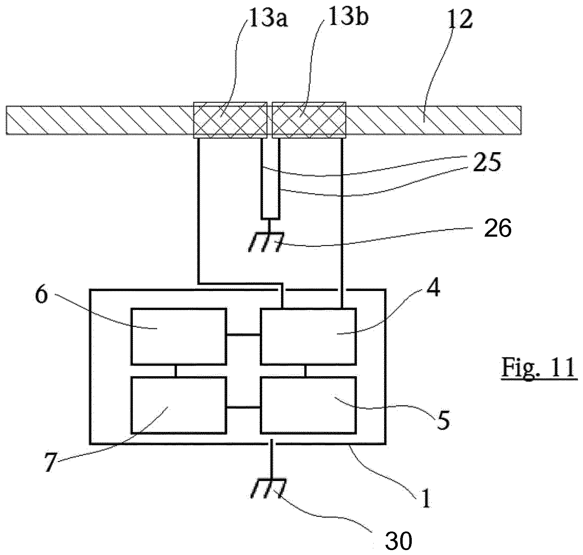

In Fig. 11 besteht die Spulenanordnung 12 aus zwei Teilspulen 13a, 13b. Hierdurch lässt sich beispielsweise eine angepasste Feldverteilung durch einen Spulenkern 13 mit zwei Endbereichen und mehreren Kabelstutzen erreichen, wobei die Anzahl der Teilspulen nicht der Anzahl der Endbereichen des Spulenkerns 13 entsprechen muss. Teilspulen können auch auf mehrere einzelne Spulenkerne verteilt werden.

Darüber hinaus kann beispielsweise gemäß Fig. 11 mithilfe zweier Teilspulen 13a, 13b eine symmetrische Energie- und Datenübertragung zwischen Elektronikeinheit 1 und Spulenanordnung 12 stattfinden. Dies ist insbesondere vorteilhaft, falls die HF-Schnittstelle 4 elektrisch symmetrisch ausgelegt ist, in diesem Fall entfällt die Notwendigkeit eines Baluns 20. Je nach gewählter Windungsrichtung der Teilspulen 13a, 13b schafft die Beschaltung 25 eine Verbindung mit einer ersten Signalmasse 26 der Teilspulen 13a, 13b und/oder mit einer zweiten Signalmasse 30 der Elektronikeinheit 1.

Beschriebene Spulenanordnungen lassen sich nicht nur mit unterschiedlichen Frequenzen verwenden, sondern beispielsweise auch für andere, uni- wie bidirektionale Datenverbindungen, beispielsweise Bluetooth (IEEE 802.15.1), WLAN (IEEE 802.11...), HIPERLAN, IWLAN, WirelessHART und NFC.

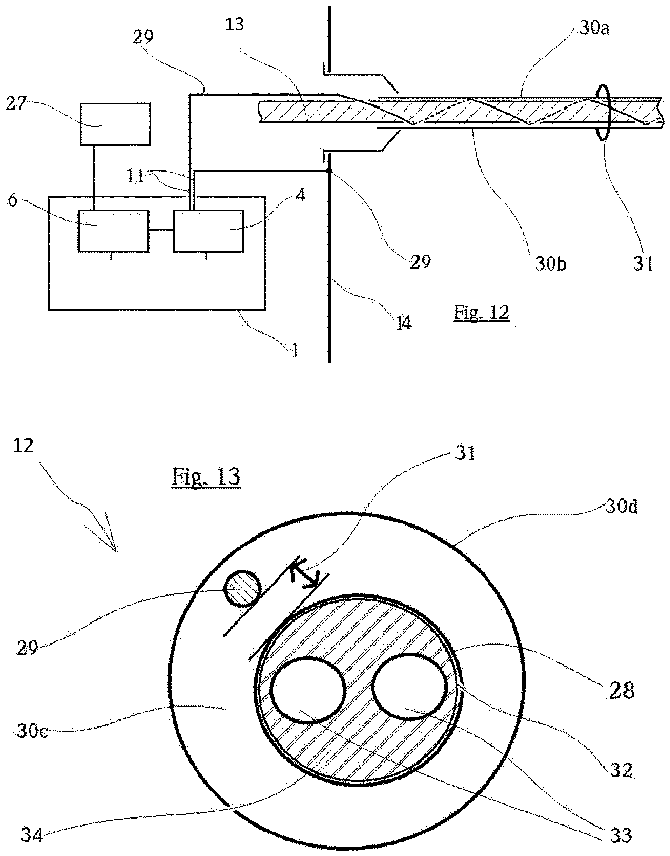

Insbesondere für Datenübertragungen ohne notwendige Energieübertragungen eignet sich eine Ausgestaltung gemäß (Fig. 12). Hierbei wird dem konventionellen Spulenkern 13 ein weiteres Kabel 29 hinzugefügt. Dieser ist gerade entlang des übrigen Kabels 28 geführt oder auf diesem spiralförmig aufgewickelt und dient als Spulenanordnung 12, insbesondere vorteilhaft für mittlere bis tiefe Frequenzen (beispielsweise 125 kHz... 30 MHz).

Bei einer derartigen Spulenanordnung 12 (Fig. 12) ist eine elektrische Verbindung vom HF-Interface 4 zum metallisierten Gehäuse sinnvoll. Diese kann eine galvanische Trennung zwischen einer übrigen Geräteelektronik 27 und dem HF-Interface 4 bedingen, welche beispielsweise durch ein kapazitives Bauelement (Kondensator oder entsprechende Platinenstruktur) realisiert wird.

Falls die Signale im Spulenkern 13 oberschneidende und/oder gradzahligen Teiler und/oder ein gradzahliges vielfaches der Frequenzen des HF-Interface 4 ausweisen, ist eine Abschirmung des Kabels 28 sinnvoll. In diesem Fall sollte ein geringer Abstand 31, beispielsweise 0.1 mm zwischen dem Kabel 29 und der Abschirmung 32 gewählt werden (Fig. 13).

Hierbei ist das Kabel 29 (beispielsweise ein Kupferdraht) mit der HF-Schnittstelle 4 verbunden, welcher zur Abschirmung 32 den Abstand 31 aufweist.

Diese Abschirmung kann beispielsweise aus einer oder mehreren leitfähigen Folien oder einer oder mehreren Drahtgeflechten bestehen, sowie einer Mischform hieraus. Innerhalb der Abschirmung befindet sich eine Zweidrahtleitung, bestehend aus zwei Leitern und Isolationsmaterial 34. Die Spulenanordnung 12, welche das Isolationsmaterial 34 umschließt weist eine verstärkte Hülle auf.

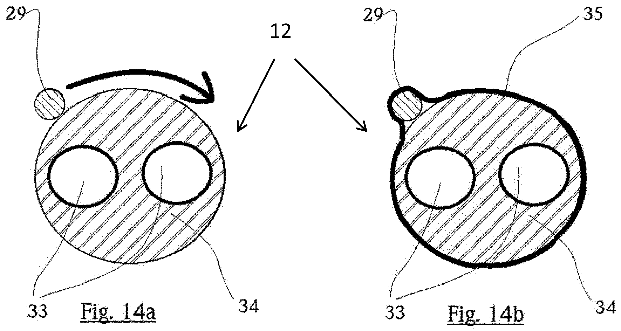

Ein kostengünstiges und technisch leicht zu realisierendes Feldgerät besteht aus einem Kabel 29, welcher in einem ersten Schritt nach spiralförmig auf eine Zweidrahtleitung 33 aufgewickelt wird (Fig. 14a), wobei die Zweidrahtleitung 33 aus zwei Leitern und einem Isolationsmaterial 34 besteht, jedoch keine Abschirmung aufweist. Die Spulenanordnung 12 soll eine definierte Länge aufweisen, welche von der Kabellänge, der Betriebsfrequenzen und den Sende- und/ oder den Empfangseigenschaften abhängig ist. In einem zweiten Schritt wird ein langer Schrumpfschlauch 35 angebracht, welcher in der Länge derart ausgeführt ist, dass dieser den Kabel 29, der als Kupferdraht ausgebildet ist, umschließt (Fig. 14b).

## Bezugszeichenliste

1. Elektronikeinheit
2. Spulenanordnung nach dem Stand der Technik
3. Überbrückung
4. HF-Schnittstelle
5. Spannungsversorgung
6. Logikeinheit
7. Datenspeicher
8. offene Leitung
9. offene Leitung
10. Erste Gehäuseöffnung aus nicht-leitfähigem Material
11. Verbindungsleitung
12. Erfindungsgemäße Spulenanordnung
13. 13a) erster Spulenkern, 13b) zweiter Spulenkern
14. Gehäusewand
15. Zweite Gehäuseöffnung aus nicht-leitfähigem Material
16. Durchführungskabel
17. magnetische Feldlinien
18. magnetische Feldlinien
19. Hochfrequenzleiter
20. Impedanzanpassung
21. separate Kammer
22. Scheibe
23. Strukturen 23a und 23b
24. Bereich
25. Beschaltung
26. Erste Signalmasse
27. Geräteelektronik
28. Draht
29. Kabel
30. Zweite Signalmasse
31. Abstand
32. Abschirmung
33. Zweidrahtleitung
34. Isolationsmaterial
35. Schrumpfschlauch

## Patentansprüche

1. Vorrichtung zur Übertragung von Signalen aus einem zumindest teilweise aus Metall gebildeten Gehäuse zur Identifizierung mit Hilfe elektromagnetischer Wellen (RFID), umfassend:

   - Mindestens eine erste Gehäuseöffnung (10),
   - eine Spulenanordnung (12) zur Erzeugung der elektromagnetischen Wellen (RFID), **dadurch gekennzeichnet, dass** die Spulenanordnung (12) einen Spulenkern (13) aufweist, der zumindest in einem Endbereich derart entlang eines Vektors $(\vec{B}_{max})$ verläuft, so dass die magnetische Flussdichte, die aus dem Endbereich der Spulenanordnung (12) ein- oder austritt, entlang des Vektors $(\vec{B}_{max})$ einen maximalen Betrag aufweist, und wobei die Spulenanordnung (12) derart in dem Gehäuse angeordnet ist, dass der Vektor $(\vec{B}_{max})$ auf die erste Gehäuseöffnung (10) zeigt.

2. Vorrichtung nach Anspruch 1, **dadurch gekennzeichnet, dass** das Gehäuse eine zweite Gehäuseöffnung (15) aufweist und dass der Vektor $(\vec{B}_{max})$ oder sein Gegenvektor $(-\vec{B}_{max})$ auf die erste Gehäuseöffnung (10) oder auf die zweite Gehäuseöffnung (15) zeigt und dass eine Feldlinie, zu welcher der Vektor $(\vec{B}_{max})$ tangential steht, im Wesentlichen durch die erste Gehäuseöffnung (10) und durch die zweite Gehäuseöffnung (15) verläuft.

3. Vorrichtung nach einem der Ansprüche 1 oder 2, **dadurch gekennzeichnet, dass** im Gehäuse eine Elektronikeinheit (1) angeordnet ist, wobei die Elektronikeinheit (1) und die Spulenanordnung (12) mittels eines Hochfrequenzleiters (19), insbesondere eines Koaxialkabels verbunden sind.

4. Vorrichtung nach Anspruch 3, **dadurch gekennzeichnet, dass** die Elektronikeinheit (1) eine hochfrequenztechnische und/oder niederfrequenztechnische Schnittstelle (4) aufweist, wobei die Schnittstelle (4) über eine Impedanzanpassung (20) und/oder einen Balun (20) mit der Spulenanordnung (12) verbunden ist.

5. Vorrichtung nach einem der Ansprüche 1 bis 4, **dadurch gekennzeichnet, dass** die Spulenanordnung (12) mindestens eine Spule umfasst und die Spule dermaßen asymmetrisch auf dem Spulenkern (13) angeordnet ist, dass das erzeugte Magnetfeld asymmetrisch ausgebildet ist.

6. Vorrichtung nach Anspruch 5, **dadurch gekennzeichnet, dass** der mindestens eine Spulenkern (13) auf seiner Oberfläche Strukturen (23a, 23b) aufweist, die so ausgestaltet sind, dass sie die Feldverteilung des Magnetfeldes beeinflussen.

7. Vorrichtung nach einem der vorhergehenden Ansprüche, **dadurch gekennzeichnet, dass** der Spulenkern (13) aus einem ferromagnetischen und/oder diamagnetischen und/oder paramagnetischen Stoff, wie beispielsweise PVC und/oder Kunststoff, ausgebildet ist.

8. Vorrichtung nach einem der Ansprüche 5 bis 7, **dadurch gekennzeichnet, dass** die Spulenanordnung (12) aus mehreren Teilspulen (12a, 12b) besteht, die miteinander und/oder mit einer ersten Signalmasse (26) und/oder mit einer zweiten Signalmasse (30) der Elektronikeinheit (1) elektrisch verbunden sind.

9. Vorrichtung nach Anspruch 8, **dadurch gekennzeichnet, dass** die Spulenanordnung (12) mindestens eine Windung aufweist und als ein elektrisch offener Stromkreis ausgebildet ist.

10. Vorrichtung nach einem der Ansprüche 5 bis 9, **dadurch gekennzeichnet, dass** die Spulenanordnung (12) mit einer Verbindungsleitung (11) elektrisch an die Gehäusewand (14) angeschlossen ist.

11. Vorrichtung nach einem der Ansprüche 1 bis 10, **dadurch gekennzeichnet, dass** mindestens eine der Gehäuseöffnungen (10, 15) durch eine Scheibe (22) aus Plastik und/oder Glas geschlossen ist und/oder dass die Spulenanordnung (12) in eine zu mindestens einer der Gehäuseöffnungen (10, 15) hin offenen separaten Kammer (21) angeordnet ist.

12. RFID-System, umfassend einem Lesegerät und einer Vorrichtung nach zumindest einem der Ansprüche 1 bis 11.

13. Feldgerät, umfassend ein RFID-Systems nach Anspruch 12.

14. Verwendung einer Vorrichtung nach zumindest einem der Ansprüche 1 bis 11 für Bluetooth (IEEE 802.15.1), WLAN (IEEE 802.15.1), HIPERLAN, IWLAN, WirelessHART und NFC.

## Claims

1. Apparatus for the transmission of signals from a housing made at least partially from metal for the purpose of identification using electromagnetic waves (RFID), comprising:

   - at least a first housing opening (10),
   - a coil arrangement (12) designed to generate the electromagnetic waves (RFID),
   **characterized in that**
   the coil arrangement (12) has a coil core (13) which, at least in an end area, extends along a vector ($B_{max}$) in such a way that the magnetic flow density entering or exiting the end area of the coil arrangement (12) has a maximum value along the vector (Bmax), and
   wherein the coil arrangement (12) is arranged in the housing in such a way that the vector ($B_{max}$) is directed towards the first housing opening (10).

2. Apparatus as claimed in Claim 1, **characterized in that** the housing has a second housing opening (15) and that the vector ($B_{max}$) or its counter-vector (-Bmax) is directed towards the first housing opening (10) or towards the second housing opening (15), and **in that** a field line to which the vector ($B_{max}$) is tangential essentially passes through the first housing opening (10) and the second housing opening (15).

3. Apparatus as claimed in Claim 1 or 2, **characterized in that** an electronic unit (1) is arranged in the housing, wherein the electronic unit (1) and the coil arrangement (12) is connected by means of a high-frequency conductor (19), particularly a coaxial cable.

4. Apparatus as claimed in Claim 3, **characterized in that** the electronic unit (1) comprises a high-frequency and/or low-frequency interface (4), wherein the interface (4) is connected to the coil arrangement (12) via an impedance adaptation (20) and/or a balun (20).

5. Apparatus as claimed in one of the Claims 1 to 4, **characterized in that** the coil arrangement (12) comprises at least a coil and the coil is arranged in an asymmetrical manner on the coil core (13) in such a way that the generated magnetic field is asymmetric.

6. Apparatus as claimed in Claim 5, **characterized in**

**that** the at least one coil core (13) has structures (23a, 23b) on its surface that are designed to influence the field distribution of the magnetic field.

7. Apparatus as claimed in one of the previous claims, **characterized in that** the coil core (13) is made from a ferromagnetic and/or diamagnetic and/or paramagnetic material, such as PVC and/or plastic.

8. Apparatus as claimed in one of the Claims 5 to 7, **characterized in that** the coil arrangement (12) comprises multiple partial coils (12a, 12b) that are electrically connected to one another and/or to a first signal ground (26) and/or to a second signal ground (30) of the electronic unit (1).

9. Apparatus as claimed in Claim 8, **characterized in that** the coil arrangement (12) comprises at least a winding and is designed as an electrically open circuit.

10. Apparatus as claimed in one of the Claims 5 to 9, **characterized in that** the coil arrangement (12) is electrically connected to the wall of the housing (14) by means of a connecting cable (11).

11. Apparatus as claimed in one of the Claims 1 to 10, **characterized in that** at least one of the housing openings (10, 15) is closed by a pane (22) made of plastic and/or glass and/or that the coil arrangement (12) is arranged in a separate chamber (21) that is open towards at least one of the housing openings (10, 15).

12. RFID system, comprising a reader and an apparatus as claimed in at least one of the Claims 1 to 11.

13. Field device, comprising an RFID system as claimed in Claim 12.

14. Use of an apparatus as claimed in at least one of the Claims 1 to 11 for Bluetooth (IEEE 802.15.1), WLAN (IEEE 802.15.1), HIPERLAN, IWLAN, WirelessHART and NFC.

**Revendications**

1. Dispositif destiné à la transmission de signaux à partir d'un boîtier formé au moins partiellement de métal en vue de l'identification au moyen d'ondes électromagnétiques (RFID), comprenant :

- au moins une première ouverture de boîtier (10),
- un agencement de bobines (12) destiné à générer les ondes électromagnétiques (RFID), **caractérisé**

**en ce que** l'agencement de bobines (12) présente un noyau de bobine (13) qui, au moins dans une zone d'extrémité, s'étend le long d'un vecteur ($B_{max}$) de telle sorte que la densité de flux magnétique entrant ou sortant de la zone d'extrémité de l'agencement de bobines (12) présente une amplitude maximale le long du vecteur (Bmax), et
dispositif pour lequel l'agencement de bobines (12) est disposé dans le boîtier de telle sorte que le vecteur ($B_{max}$) est dirigé vers la première ouverture de boîtier (10).

2. Dispositif selon la revendication 1, **caractérisé en ce que** le boîtier présente une deuxième ouverture de boîtier (15) et **en ce que** le vecteur ($B_{max}$) ou son contre-vecteur ($-B_{max}$) est dirigé vers la première ouverture de boîtier (10) ou vers la deuxième ouverture de boîtier (15), et **en ce qu'**une ligne de champ, à laquelle le vecteur ($B_{max}$) est tangentiel, passe essentiellement par la première ouverture de boîtier (10) et par la deuxième ouverture de boîtier (15).

3. Dispositif selon la revendication 1 ou 2, **caractérisé en ce qu'**une unité électronique (1) est disposée dans le boîtier, l'unité électronique (1) et l'agencement de bobines (12) étant reliés au moyen d'un conducteur haute fréquence (19), notamment un câble coaxial.

4. Dispositif selon la revendication 3, **caractérisé en ce que** l'unité électronique (1) comprend une interface (4) haute fréquence et/ou basse fréquence, l'interface (4) étant reliée à l'agencement de bobines (12) via une adaptation d'impédance (20) et/ou un balun (20).

5. Dispositif selon l'une des revendications 1 à 4, **caractérisé en ce que** l'agencement de bobines (12) comprend au moins une bobine et la bobine est disposée de manière asymétrique sur le noyau de bobine (13) de sorte que le champ magnétique généré est asymétrique.

6. Dispositif selon la revendication 5, **caractérisé en ce que** l'au moins un noyau de bobine (13) présente sur sa surface des structures (23a, 23b), qui sont conçues pour influencer la répartition du champ magnétique.

7. Dispositif selon l'une des revendications précédentes, **caractérisé en ce que** le noyau de bobine (13) est constitué d'un matériau ferromagnétique et/ou diamagnétique et/ou paramagnétique, tel que le PVC et/ou le plastique.

8. Dispositif selon l'une des revendications 5 à 7, **caractérisé en ce que** l'agencement de bobines (12) comprend une pluralité de bobines partielles (12a, 12b), qui sont reliées électriquement entre elles et/ou à une première masse de signal (26) et/ou à une deuxième masse de signal (30) de l'unité électronique (1).

**9.** Dispositif selon la revendication 8, **caractérisé en ce que** l'agencement de bobines (12) comprend au moins un enroulement et est conçu comme un circuit électrique ouvert.

**10.** Dispositif selon l'une des revendications 5 à 9, **caractérisé en ce que** l'agencement de bobines (12) est relié électriquement à la paroi de boîtier (14) au moyen d'un câble de raccordement (11).

**11.** Dispositif selon l'une des revendications 1 à 10, **caractérisé en ce qu'**au moins l'une des ouvertures du boîtier (10, 15) est fermée par une vitre (22) en matière plastique et/ou en verre et/ou **en ce que** l'agencement de bobines (12) est disposé dans une chambre séparée (21) ouverte en direction d'au moins l'une des ouvertures de boîtier (10, 15).

**12.** Système RFID, comprenant un appareil de lecture et un dispositif selon au moins l'une des revendications 1 à 11.

**13.** Appareil de terrain, comprenant un système RFID selon la revendication 12.

**14.** Utilisation d'un dispositif selon au moins l'une des revendications 1 à 11 pour Bluetooth (IEEE 802.15.1), WLAN (IEEE 802.15.1), HIPERLAN, IWLAN, WirelessHART et NFC.

Fig. 1
(StdT)

Fig. 2 (StdT)

Fig. 3 (StdT)

Fig. 4

$-\vec{B}_{max}$

$\vec{B}_{max}$

13

16

10

14

11

12

6

4

7

5

1

$-\vec{B}_{max}$

$\vec{B}_{max}$

18

11

12 13

10

17

14

Fig. 5

Fig. 6

$-\vec{B}_{max}$

$\vec{B}_{max}$

6

19

13

4

7

20

12

5

10

1

14

Fig. 7

$-\vec{B}_{max}$

13

$\vec{B}_{max}$

6

19

4

22

7

21

20

12

5

1

14

Fig. 8

Fig. 9

$\vec{B}_{max}$

Fig. 10

Fig. 11

Fig. 12

Fig. 13

29

12

29          35

Fig. 14a          34

33          Fig. 14b          34

33

34

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- EP 1308883 A1
- US 2012187197 A1